# EUROPEAN PATENT APPLICATION

(11) **EP 4 818 829 A2**
(43) Date of publication of application: **07.10.2026**
(21) Application number: 26192626.5
(22) Date of filing: 25.02.2022
(51) Int. Cl.: G05B 15/02

(54) **EDGE COMPUTING DEVICE FOR PROCESSING PLANT PROCESS DATA**

(30) Priority: 26.02.2021 EP 21159659
(62) Document number(s) of the earlier application(s) in accordance with Art. 76 EPC: 22712542.4 / 4 298 484
(71) Applicant: BASF SE, 67056 Ludwigshafen am Rhein (DE)
(72) Inventor: GAU, Sebastian, 67061 Ludwigshafen am Rhein (DE)
(74) Representative: BASF IP Association

(57) **Abstract**

The invention refers to an edge computing device 120 for processing data 112 acquired with respect to a production process of an industrial plant comprising a plant control system 110, wherein the control system comprises a server 111. The device comprises a first unit 125 configured to be communicatively coupled to the server for receiving the data from the system. A second unit 121 is configured to provide a container runtime environment 122 configured to run a container on the second unit. A process container 123 is configured to run on the environment, wherein the process container comprises a program configured to process data acquired with respect to a production process of the industrial plant when running inside the process container. The first unit is communicatively coupled to the second unit for providing the received data to the environment, wherein the program is configured to process the provided data.

## Description

### FIELD OF THE INVENTION

The invention refers to an edge computing device, a computing framework, a method and a computer program product for processing plant process data acquired with respect to a production process of an industrial plant.

### BACKGROUND OF THE INVENTION

Today, an optimization of the complex production processes in industrial plants, for instance, in the chemical or pharmaceutical industry, is often used to increase the reliability, quality and quantity of the production. With increasing complexity of the production processes, analysis and optimization programs and an IT infrastructure running these programs have often to be updated, for instance, by adding additional hardware and/or software. Generally, such analysis and optimization programs are based on processing plant process data received from a plant control system controlling the industrial plant and are often also adapted to provide as output respective optimized control data back to the plant control system. To increase the data security of the data input and output of the analysis and optimization program, the respective analysis and optimization program is often deployed on site, i.e. is part of the plant hard- and/orsoftware structure. Accordingly, it is often difficult and ineffective to adapt, update, or replace an analysis and optimization program in a plurality of industrial plants. In many cases, it is even necessary to manipulate the software and/or hardware of the production plant manually on site. This makes the development and deployment process of analysis and optimization programs for production plants ineffective and time consuming. It would thus be advantageous if analysis and optimization programs for a plurality of industrial plants could be managed, i.e. adapted, updated and/or replaced, more effectively.

### SUMMARY OF THE INVENTION

It is an object of the present invention to provide an edge computing device, a computing framework, a method and a computer program product that allow for a more effective management, i.e. updating, adapting and/or replacing, of an industrial plant analysis and optimization program.

In a first aspect of the present invention an edge computing device for processing plant process data acquired with respect to a production process of an industrial plant comprising a plant control system is presented, wherein the plant control system comprises an interface server. The edge computing device comprises a) an interface computing unit configured to be communicatively coupled to the interface server for receiving the plant process data from the plant control system, b) a container computing unit configured to provide a container runtime environment configured to run a container on the container computing unit, and c) a process container configured to run on the container runtime environment, wherein the process container comprises a processing program configured to process plant process data acquired with respect to a production process of the industrial plant when running inside the process container, wherein the interface computing unit is communicatively coupled to the container computing unit for providing the received plant process data to the container runtime environment, wherein the processing program is configured to process the provided plant process data.

Since the edge computing device provides a container computing unit and a process container configured to run in the container runtime environment, wherein the process container comprises a processing program configured to process plant process data, for instance, to analyse and optimize the plant processes based on the plant process data, the processing program can be run independently of the respective hard- and software provided as part of the industrial plant. Moreover, the independence of the runtime environment of the processing program from the hard- and/or software provided by the industrial plant allows for a management of the processing program independent of the IT infrastructure of the industrial plant. The efficiency of managing, i.e. adapting, updating and/or replacing, of a processing program for optimizing the processes of an industrial plant can thus be increased.

Generally, an edge computing device refers to a computing device that is adapted to follow an edge computing paradigm that, in contrast to a cloud computing paradigm, refers to a distributed computing that brings the computation closer to a location where the results of the computation are needed. Utilizing edge computing generally allows to improve the security of data transmission, to improve response times and allows to safe network bandwidth. Moreover, edge computing in this application allows to enable a physical island mode operation of the combination of plant automation systems and connected IT infrastructure, e.g. the edge device. Thus, it is preferred that the edge computing device is provided on site, i.e. as part of the industrial plant and in direct connection to the computational hardware and/or software of the industrial plant.

The plant process data acquired with respect to a production process of an industrial plant can refer to any data that is acquired by a plant control system during the production process. For example, the plant process data can refer to sensor measurements of a plurality of sensors provided within the plant to monitor the production process. The process data can also refer to settings utilized by one or more production facilities of the industrial plant during the production process, for example, to the settings of a valve, an industrial heater, a pump, etc. The plant control system can refer to any system that is used for controlling production processes within the plant and is realized as hard- and/or software within the industrial plant. The plant control system comprises an interface server that is adapted to interface with other computing units to provide, for instance, the acquired plant process data to the other computing units.

The interface computing unit is configured to be communicatively coupled to the interface server for receiving the plant process data from the plant control system. For example, the interface computing unit of the edge computing device can be communicatively coupled via a wired or wireless connection to the interface server of the plant control system. Preferably, in order to increase the security and availability of the data transmission, the interface computing unit is communicatively coupled via a wired connection to the interface server. However, also a wireless connection, based for instance, on the 5G standard, can be preferred, if the wireless connection is save and reliably available.

The container computing unit is configured to provide a container runtime environment configured to run a container on the container runtime environment. The container runtime environment refers to a computational environment that allows the running of a container. A container can in this context generally be defined as an instance of an operation system that is isolated from other instances of the operation system and for which the computational resources of the edge computing device usable by the respective container can be independently managed. Accordingly, the container bundles all resources and runtime dependencies of a computer program running in the container down to the kernel level. Moreover, due to the restriction of the computational resources of the computing system onto which the container can access, it is preferred that each container comprises the respective software needed for running a respective program that is containerized in the container. For example, a container preferably comprises all libraries of the computational framework needed by a respective processing program.

The edge computing device further comprises a process container that is configured to run on the container runtime environment. The process container comprises a processing program that is containerized in the process container. The processing program is generally configured to process plant process data acquired with respect to a production process of the industrial plant when running inside the container. The processing preferably refers to an analysis of the plant process data with respect to an optimization of the production process of the industrial plant. Further, the processing can refer to generating optimized plant control data that can be used for controlling the industrial plant to perform an optimized production process. The processing program can refer to any known already existing processing program or to an individualized processing program that is specifically adapted for the processing of plant process data of a specific production plant. For example, the processing program can refer to a soft sensor. A soft sensor, for instance, can be realized as a Kalman filter that reconstructs an inner state of the industrial plant that can be difficult to measure on a physical level. Such a reconstructed inner state can then be fed back as plant control data into the plant control system, where this form of plant control data can then be treated as real physical measurement. In another example, the processing program can refer to a model predictive controller. Such controllers are, for instance, used for optimizing a throughput through a distillation column based on a state space model of the underlying process.

The interface computing unit is further communicatively coupled to the container computing unit such that received plant process data received from the interface server can be provided to the container runtime environment. The communicative coupling can be realized in form of any wired or wireless connection between the interface computing unit and the container computing unit. Preferably, the interface computing unit and the container computing unit are part of the same computing hardware and/or software. In this case, the communicative coupling can refer to a virtual coupling that allows the container computing unit to access data provided by the interface computing unit and vice versa. Generally, the container runtime environment is adapted to provide as resource to the container access of the processing program containerized in the process container to the received plant process data. The processing program is then configured to access and in particular process the provided plant process data.

In an embodiment, the interface computing unit is communicatively coupled via a protocol converter to the interface server, wherein the protocol converter is configured to isolate and tunnel the plant process data and to convert the plant process data from a data format utilized at the interface server to a data format utilized by the interface computing unit. In many applications, the plant control system and thus the interface server provides data, in particular, plant processing data in a specific format, whereas the edge computing device, in particular, the interface computing unit, is configured to use a different data format, for instance, a more modern data format. In this case, the protocol converter provided between the interface computing unit and the interface server converts the data from the interface server to a data format utilized at the interface computing unit and thus allows for a more effective exchange of data. The protocol converter can, for performing this task, be provided as part of the interface server, as part of the interface computing unit or as part of both, the interface server and the interface computing unit. For instance, the protocol converter can be provided as hardware and/or software on the interface server, the interface computing unit or on both.

Moreover, the protocol converter is configured to isolate and tunnel the plant process data. Generally, an isolation of data refers to a processing of data such that only the intended data is transferred. The tunnelling of data generally refers to a repackaging of the transferred data during the transfer into a different data protocol and a transporting of the data physically from a source to a respective receiver. In a preferred embodiment, the protocol converter is adapted for tunnelling the plant process data by utilizing an encryption for encrypting the plant process data.

Since the protocol converter is adapted to convert the plant process data from a data format utilized at the interface server to a data format utilized by the interface computing unit and further in this process to isolate and tunnel the plant process data, the communication between the interface server and the interface computing unit becomes not only more efficient but further the security of this communication is strongly increased.

In a preferred embodiment, the protocol converter is configured to convert plant process data provided in a legacy data format at the interface server to a modern data format. In many plant control systems, still a plurality of legacy soft- and hardware systems are active, for instance, due to a stable working performance and further due to the often high expense necessary for implementing new hard- or software into an already running plant control system. Accordingly, such legacy soft- or hardware systems also provide respective legacy data, i.e. data provided in a legacy data format, wherein a legacy data format refers to a data format that is superseded or obsolete and generally no longer used in up-to-date applications. In this context, the term "modern data format" refers to a data format that is still usable by current and up-to-date soft- and hardware applications. Since many legacy data formats are not only not usable by modern hardware and software systems but further can comprise additional drawbacks like security problems, decreased storage performance, etc., it is advantageous to convert plant process data provided in a legacy data format into a modern data format for transferring the plant process data to the interface computing unit. For example, the legacy data format can refer to an Open Platform Communications Data Access (OPC DA) format, wherein the modern data format refers to an Open Platform Communication Unified Access (OPC UA) format. In this case, it is preferred that the protocol converter comprises an open Platform Communications Data Access-to-Unified Access (OPC DA-to-UA) converter that is configured to convert the plant process data provided in an OPC DA format at the interface server by applying to the plant process data an OPC UA wrapper. However, if the plant process data is already provided at a modern data format, it is preferred that the protocol converter is adapted to act as a transparent communication tunnel, i.e. that the protocol converter does not convert the plant process data but only isolates and tunnels the plant process data.

In an embodiment, the processing program is configured to provide plant control data for controlling or optimizing the industrial plant based on the processing of the plant process data, wherein the container computing unit is communicatively coupled to the interface computing unit for providing the plant control data to the interface computing unit, wherein the interface computing unit is communicatively coupled with the interface server for providing the plant control data to the interface server for implementation on the plant control system of the industrial plant. In this embodiment, the processing program is adapted to determine, based on the plant process data, plant control data that can be used for controlling or optimizing the industrial plant. In particular, the plant control data can be the result of an analysis of the plant process data. For example, such an analysis might show that the production of the specific product of the production plant could be improved if some hardware in the production process, for instance, a heater, would be controlled differently, for instance, would be controlled to provide less heat to the product at a specific stage of production. Accordingly, for this example the provided plant control data could comprise data that indicates to the plant control system of the industrial plant to adapt the controlling of the respective hardware, in this example, the heater, accordingly. The plant control data provided by the processing program is then provided via the communicatively coupled container computing unit to the interface computing unit and further from the interface computing unit to the interface server such that the plant control data can be implemented in the plant control system of the industrial plant. This embodiment allows not only to analyse and process data provided from the industrial plant but further to influence, in particular, optimize, directly the control of the industrial plant.

Also in this embodiment, it is preferred that the interface computing unit is communicatively coupled via a protocol converter to the interface server, wherein the protocol converter is configured to isolate and tunnel the plant control data and to convert the plant control data from a data format utilized at the interface computing unit to a data format utilized by the interface server. As already discussed above, also in this case it is advantageous for the case that the plant control system still comprises soft- and/or hardware that utilizes a legacy data format, that the protocol converter is configured to convert the plant control data provided in a modern data format into a legacy data format to provide the plant control data to the plant control system. For example, the protocol converter can comprise an OPC DA-to-UA converter, wherein the OPC DA-to-UA converter is configured to convert OPC UA formatted plant control data into an OPC DA format to provide the plant control data to the plant control system.

In an embodiment, the edge computing device comprises further an abstraction container configured to run on the container runtime environment, wherein the abstraction container comprises an abstraction program that is configured to pre-process the plant process data before the plant process data is provided to the process container. Providing an abstraction container comprising an abstraction program for pre-processing the plant process data allows for a higher flexibility of the system with respect to how the plant process data is provided by the interface computing unit to the container computing unit in view of how the plant process data is utilized in the processing program. The pre-processing performed by the abstraction program can refer to any kind of processing of the plant process data that allows to provide the plant process data received from the interface computing unit in a format expected as input by the processing program. For example, the pre-processing can refer to a converting of the plant process data, wherein in this case the abstraction program comprises a respective data or protocol converter. However, the pre-processing can also refer to a sorting or converting of one physical unit to another physical unit, like the converting of all physical units into SI units. Moreover, the abstraction program can also be adapted to filter the plant process data, for instance, to provide only a part of the plant process data to the process container and thus to the processing program. Furthermore, the abstraction program can also be adapted to perform operations on time series data, for instance, to compute aggregated averages of values over a time window. Such aggregated time series data is especially suitable for utilization in machine learning models.

Since the abstraction container is provided comprising an abstraction program, the system becomes not only more flexible, providing the abstraction program in form of an abstraction container but has further the advantage that it can be managed, i.e. updated, adapted or replaced, in the same easy and effective manner as the processing container and thus allows for an easy adaption of any changes made in the processing program. Moreover, when utilizing an abstraction program for pre-processing the plant process data, also the processing container, in particular, the respective processing program running in the processing container, can be shared more easily over a plurality of industrial plants such that not every industrial plant needs a customized processing program. This increases in general the effectivity of managing the processing of the plant process data even more.

In an embodiment, the interface computing unit and/or the container computing unit is configured to run a virtual Windows environment and/or a virtual Linux environment. In particular, it is preferred that the container computing unit is either running as operational system a Linux environment or is configured to run a virtual Linux environment on which the container runtime environment can be provided. Moreover, it is preferred that the interface computing unit is configured to run as an operational system a Windows environment or is adapted to run a virtual Windows environment if running with a different operation system. Generally, the interface computing unit and the container computing unit can be adapted to run on any suitable operation system and can then be adapted to provide, if necessary, a respective virtual environment in which another operation system is run in order to allow the running of certain software advantageously for the respective tasks of the interface computing unit and/or the container computing unit.

Configuring the interface computing unit and/or the container computing unit to run respective virtual operation system environments further increases the flexibility of the edge computing device, for instance, with respect to the operation system running on the respective computing units of the edge computing device.

In an embodiment, the container runtime environment is configured to allow a deployment of the processing program running within the process container via a continuous integration and continuous delivery (CI/CD) workflow. Since the container runtime environment is configured to allow a deployment of the processing program via a CI/CD workflow, the processing program can be managed very effectively also in cases in which a plurality of processing programs for different industrial plants have to be managed. Moreover, if the container runtime environment further comprises an abstraction container with an abstraction program, it is further preferred that also the abstraction program can be deployed via a CI/CD workflow.

In a further aspect of the invention, a computing framework for processing plant process data acquired with respect to a production process of an industrial plant comprising a plant control system is presented, wherein the computing framework comprises a) an edge computing device as described above, and b) an interface server being part of the plant control system, wherein the interface server is communicatively coupled to the interface computing unit to provide plant process data from the plant control system to the interface computing unit of the edge computing device and vice versa.

In a further aspect of the invention, a method for processing plant process data acquired with respect to a production process of an industrial plant comprising a plant control system is presented, wherein the plant control system comprises an interface server. The method comprises a) receiving plant process data from the plant control system via the interface server, b) providing a container runtime environment configured to run a container, wherein the container comprises a processing program configured to process the plant process data of the industrial plant, when running inside the container, and c) providing the received plant process data to the container runtime environment, and processing the provided plant process data by the processing program.

In a further aspect of the invention, a computer program product for processing plant process data acquired with respect to a production process of an industrial plant comprising a plant control system is presented, wherein the computer program product comprises program code means causing an edge computing device as described above to execute a method as described above.

It shall be understood that the edge computing device as described above, the computing framework as described above, the method as described above and the computer program product as described above have similar and/or identical preferred embodiments, in particular, as defined in the dependent claims.

It shall be understood that a preferred embodiment of the present invention can also be any combination of the dependent claims or above embodiments with the respective independent claim. These and other aspects of the invention will be apparent from and elucidated with reference to the embodiments described hereinafter.

### BRIEF DESCRIPTION OF THE DRAWINGS

In the following drawings:
- Fig. 1: shows schematically and exemplarily an embodiment of a computer framework for processing plant process data,
- Fig. 2: shows schematically and exemplarily a process diagram for a continuous deployment and continuous delivery workflow, and
- Fig. 3: shows schematically and exemplarily a flow diagram of a method for processing plant process data.

### DETAILED DESCRIPTION OF EMBODIMENTS

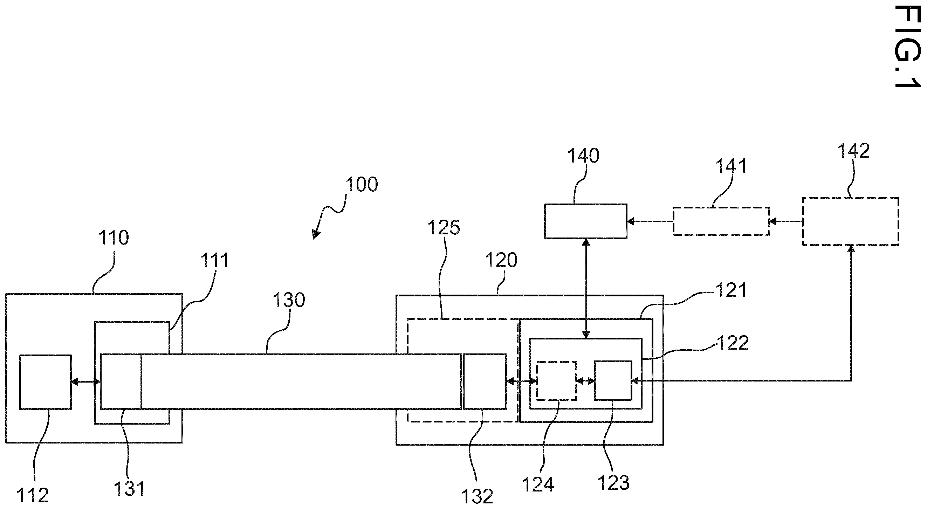

Fig. 1 shows schematically and exemplarily a computing framework 100 for processing plant process data 112 acquired with respect to a production process of an industrial plant comprising a plant control system 110.

Generally, the industrial plant can refer to any technical infrastructure that is used for an industrial purpose. The industrial purpose may be manufacturing or processing of one or more industrial products, i.e., a manufacturing process or a processing performed by the industrial plant. For example, the industrial purpose can refer to the production of an industrial product. The industrial product can, for example, be any physical product such as a chemical, a biological, a pharmaceutical, a food, a beverage, a textile, a metal, a plastic, or a semiconductor. Additionally or alternatively, the industrial product can even be a service product such as electricity, heating, air conditioning, waste treatment such as recycling, chemical treatment such as breakdown or dissolution, or even incineration, etc. Accordingly, the industrial plant may be one or more of a chemical plant, a process plant, a pharmaceutical plant, a fossil fuel processing facility such as an oil and/or a natural gas well, a refinery, a petrochemical plant, a cracking plant, and the like. The industrial plant can even be any of a distillery, an incinerator, or a power plant. Moreover, the industrial plant can even be a combination of any of the examples given above.

For performing a production process, the industrial plant comprises a technical infrastructure which can be controlled by control parameters, wherein the control parameters can be regarded as being part of plant control data implemented by a process control system into the technical infrastructure for controlling the industrial plant. The technical infrastructure may comprise equipment or process units such as any one or more of a heat exchanger, a column such as a fractionation column, a furnace, a reaction chamber, a cracking unit, a storage tank, a precipitator, a pipeline, a stack, a filter, a valve, an actuator, a transformer, a circuit breaker, a machinery, e.g., a heavy duty rotating equipment such as a turbine, a generator, a pulverizer, a compressor, a fan, a pump, a motor, etc. Each of this technical infrastructure can provide monitoring data that monitors the functioning of the technical infrastructure. Moreover, the industrial plant typically comprises a plurality of sensors that allow to measure operational parameters of the technical infrastructure. The operational parameters measured by the sensors may relate to various process parameters and/or parameters related to the equipment or the process units. For example, sensors may be used for measuring a process parameter such as a flow rate within a pipeline, a level inside a tank, a temperature of a furnace, a chemical composition of a gas, etc., and some sensors can be used for measuring vibration of a turbine, a speed of a fan, an operating of a valve, a corrosion of a pipeline, a voltage across the transformer, etc. The functional parameters and the operational parameters can both be regarded as being part of the plant process data 112 acquired with respect to a production process of the industrial plant.

The plant process data 112 can generally be part of the plant control system 110, for instance, can be acquired by and/or stored by the plant control system 110. Moreover, the plant control system 110 can also be adapted to further process the plant process data 112, for instance, to monitor, analyse and/or optimize the plant process data 112. However, in many applications the plant control system 110 is not configured to provide an up-to-date deep analysis and possible optimization of the plant process data 112 and in many cases even refers to a legacy system that does not provide the technical hard- and/or software infrastructure for an up-to-date data analysis of the plant process data 112. Accordingly, it is desired to provide a software and/or hardware that allows for an up-to-date processing of the plant process data 112 while being easily deployed and managed.

In order to solve this above-mentioned problem, the computing framework 100 is provided with an edge computing device 120. The edge computing device 120 is communicatively coupled with an interface server 111 of the plant control system 110, that can also be regarded as part of the computing framework 100. In particular, the edge computing device 120 comprises an interface computing unit 125 that provides the technical infrastructure, for instance, hardware and/or software, for communicating with the interface server 111 of the plant control system 110. Preferably, the interface computing unit 125 is adapted to receive plant process data 112 from the interface server 111 through the communicative coupling. In a preferred embodiment, as shown in Fig. 1, the interface computing unit 125 is communicatively coupled via a protocol converter 130 to the interface server 111. Preferably, the protocol converter 130 is configured to isolate and tunnel the plant process data 112 from the interface server 111 to the interface computing unit 125. This allows for a safe and effective transfer of the plant process data 112 from the plant control system 110 to the edge computing device 120. Moreover, the protocol converter 130 can generally be adapted to convert the plant process data 112 from a data format used by the plant control system 110 to a data format used by the edge computing device 120, in particular, by the interface computing unit 125 of the edge computing device 120. If the plant control system 110 refers to a legacy system utilizing a legacy data format, it is preferred that the protocol converter 130 is adapted to convert the plant process data 112 provided in the legacy data format at the interface server 111 to a modern data format that can be utilized by the interface computing unit 125. An example of a legacy data format that can be converted in a modern data format is the OPC DA data format still utilized by many plant control systems. In this case, it is preferred that the protocol converter 130 comprises an OPC DA-to-UA converter that allows to convert the OPC DA data to an OPC UA data format. However, if the plant control system 110 provides the plant process data 112 in the same data format as utilized by the interface computing unit 125, the protocol converter 130 can refer to a transparent communication unit that does not provide any conversion to the plant process data 112 but only provides an isolation and tunnelling of the plant process data 112 between the interface server 111 and the interface computing unit 125. Generally, the protocol converter 130 can be provided as part of the interface server 111, as part of the interface computing unit 125 or as part of both, the interface server 111 and the interface computing unit 125 as indicated in Fig. 1 by the schematic parts of the protocol converter 131, 132 provided at each end of the communicative coupling.

The edge computing device 120 further comprises a container computing unit 121 configured to provide a container runtime environment 122, wherein on the container runtime environment 122 a process container 123 is provided. The container computing unit 121 can, for instance, be part of the operational system of the edge computing device 120 or, depending on the operational system running on the edge computing device 120, can also be provided with a virtual operating system different from the general operating system of the edge computing device 120. For example, if the edge computing device 120 is provided generally with a Windows operating system, the container computing unit 121 can be configured to run a virtual Linux environment operating system, since most of the container runtime environments 122 are provided as Linux-based runtime environments.

The container runtime environment 122 is then adapted to provide the process container 123 comprising a processing program running inside the process container 123. The processing program is adapted to process the plant process data 112 acquired with respect to the production process of the industrial plant. For example, the processing program can be adapted to analyse the plant process data 112 and based on the analysis to provide optimized process control data that allows for an optimized control of the industrial plant.

Optionally, the edge computing device 120 further comprises an abstraction container 124 running on the container runtime environment 122, wherein the abstraction container 124 comprises an abstraction program. The abstraction program can be provided to pre-process the plant process data 112 before it is provided to the process container 123 comprising the processing program. For example, if the plant process data 112 is provided by the interface computing unit 125 in a format that cannot be processed by the processing program, the abstraction program can be adapted to pre-process the plant process data 112 such that it can be processed by the processing program. Such pre-processing can comprise, depending on the respective configuration and interaction of the interface server 111 with the interface computing unit 125 with respect to the providing and receiving of the plant process data 112, a filtering of the plant process data 112, a unit conversion of parameters being part of the plant process data 112, a rearranging of the plant process data 112, a selecting of the plant process data 112, etc.

In a preferred embodiment, the processing program running on the process container 123 is adapted to provide, based on an analysis of the plant process data 112, plant control data that should be implemented into the plant control system 110. The process container 123 running on the container runtime environment 122 of the container computing unit 121 is then adapted to provide the plant control data to the interface computing unit 125. The interface computing unit 125 can then provide the plant control data, preferably, via the protocol converter 130, to the interface server 111 of the plant control system 110. In this case, the protocol converter 130 can be adapted to convert the plant control data from a data format utilized at the interface computing unit 125 to a data format utilized at the interface server 111, in particular, utilized by the plant control system 110. The plant control system 110 can then implement the received plant control data for controlling the industrial plant.

In a preferred embodiment, the containerized programs running in the container runtime environment 122 are deployed by a continuous integration and continuous delivery (CI/CD) workflow. This workflow is indicated by the workflow systems 140 to 142. In particular, the CI/CD workflow is based on providing a control system and container registry 140, for instance, on an external cloud-based server. The control system can, for instance, be adapted to deploy and manage all versions of the processing program and/or the abstraction program, for instance, by checking if a more updated version of the processing program is available and by then providing the update to the container runtime environment 122, for instance, by replacing the currently running processing program with the updated version of the processing program. Moreover, a container registry can be provided that registers, respectively, all containerized programs running on edge computing devices of a plurality of industrial plants, to provide an overview of all containerized programs currently utilized. Optionally, the CI/CD workflow can further comprise software and/or hardware 142 that is adapted to continuously receive and monitor the output and input to the processing program, for instance, the plant process data 112 as input and the plant control data as output. This external software/hardware 142 can then be adapted to analyse and monitor the running of the processing program, for instance, using artificial intelligence systems. Based on this monitoring and analysis, a software/hardware 141 can be provided that continuously improves the processing program and, for instance, provides updated versions of the processing program to the control system 140.

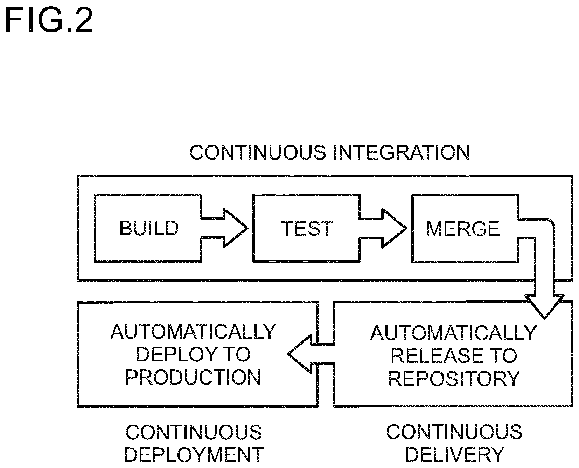

Fig. 2 shows schematically and exemplarily such a CI/CD workflow. Such a workflow can comprise, for instance, a process of first building, testing and then merging parts of a processing program and/or an abstraction program to be utilized in one or more industrial plants. This building, testing and merging can be performed, for instance, on an external server or in a cloud-based environment and allows for a safe and effective development of a respective processing program. If the processing program or, for instance, an updated version of the processing program is ready, the process can comprise automatically releasing the new version of the processing program to a repository on which the new version of the processing program is registered and stored. From the repository the new version of the processing program can then be automatically deployed, for instance, with the next update, to the edge computing device and can then be implemented in the container runtime environment of the container computing unit of the edge computing device. This allows for a very effective and improved workflow with respect to the deployment of processing programs within industrial plants.

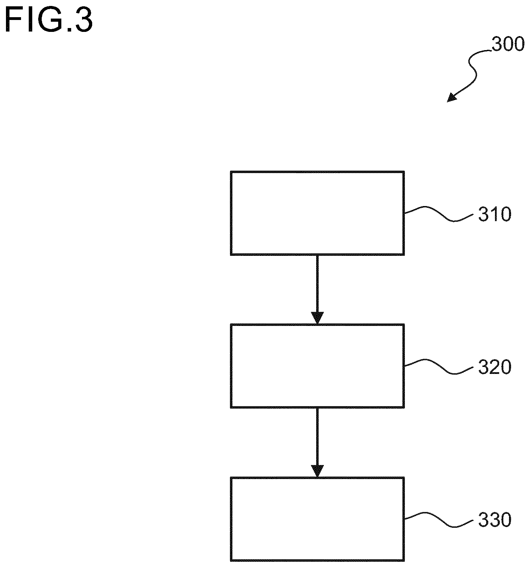

Fig. 3 refers to a schematically and exemplarily shown flow chart of a method for processing plant process data. The method 300 can be configured to be utilized together with a computing framework 100 as described with respect to Fig. 1. In particular, the method 300 comprises in a first step 310 receiving plant process data from the plant control system via the interface server. In step 320 a container runtime environment is provided that is configured to run a container, wherein the container comprises a processing program configured to process the plant process data of an industrial plant, when running inside the container. In a last step 330, the method 300 comprises providing the received plant process data to the container runtime environment and processing the provided plant process data by the processing program.

Optimization of production processes in chemical industry can be regarded as a key to increase reliability and quality of production processes. Process optimization utilizing the edge paradigm has therefore been used for multiple years. Normally, an implementation of a processing program at the edge is done by installing additional IT infrastructure in an industrial plant. A software stack of a computing framework for such a processing program can, for instance, consist of components which i) read data from a plant control system interface, i.e. an interface server, referring, for instance, to a DCS interface, often based on OPC DA, ii) process this data in a programming language suitable for optimization and advanced data analytics, e.g. Matlab, and iii) write the output data back to the DCS interface. Maintaining and deploying such edge intelligence as realized by the processing program requires manual steps until a model on the edge can be adapted, retrained or replaced, which often means going personally into a plant and manually copying files to servers within the plant. This can slow down the development and deployment process and lead to ineffective working around solutions.

A part of the solution for this problem, as discussed, for instance, with respect to Fig. 1, provides a containerization of the processing program. For example, the processing program can be deployed as Linux container containing Python, R or Scala code. Containerization enables a true 'build once - run anywhere' paradigm and therefore enables to automatically build, test and deploy processing programs from the cloud to the edge. It is therefore advantageous as further part of the solution, as already described above, for instance, with respect to Fig. 1, to enable container-based workloads to be deployed physically close to an interface sever, e.g. DCS interface, and enable them to read and write process data from and to the interface server in a seamless and secure fashion. This can be achieved by, for instance, the computing framework described with respect to Fig. 1, wherein one of the main differences to existing setups is that processing programs can be deployed as containers and be exchanged and retrained extremely fast and agile based on CI/CD pipelines based on full automation.

For example, the edge computing device can be a stand-by device, e.g. an IPC, that is placed physically close to the interface server(s) and, for instance, connected, i.e. communicatively coupled, using a highly available, possibly redundant network connection. On the interface server(s), a protocol converter, e.g. an OPC DA-to-UA converter, can be installed which isolates and tunnels possible outdated and insecure, for instance, OPC DA-based, communication locally, optionally by an OPC UA-based wrapper. However, also other protocols can be contemplated. For example, the protocol at the interface server can be a legacy protocol, e.g. COM-based OPC DA. The protocol at the interface computing unit can be a more modern protocol, e.g. MQTT or OPC UA, that enables communication with containerized computer programs. On the edge computing device an interface server, for example, an OPC UA server, is available which wraps all accesses to the interface server. Generally, the protocol converter can run on the interface server, distributed on the interface server and the interface computing unit, running, for example, an optional virtual Windows environment, or only on the interface computing unit.

Furthermore, a virtual Windows environment and/or Linux environment can be installed on the interface computing unit and the container computing unit, respectively. For example, the host operating system can be Windows with a Linux virtualization layer or Linux with a Windows virtualization layer. The virtual Windows environment enables installation of legacy software and protocols, e.g. OPC DA is only available on Windows OS. In the Linux environment, the container runtime environment for the abstraction and process containers can be deployed.

The abstraction container can be adapted to further abstract an access to the interface computing unit. For example, the optional abstraction container can transform and/or aggregate plant process data in a format so that it can be processed by the process container, e.g. by converting plant-specific units to standardized processing program input units, e.g. cm to m. The process container can contain processing programs for advanced analytics such as optimizers or trained Al models. For example, the processing program can be adapted to act as soft sensor providing additional measurements or emulate missing instrumentation, e.g. based on Kalman filters. The processing program can also refer to an Al model, for example, pre-trained using highly scalable cloud infrastructure, e.g. big data analytic tools like data bricks. Further, real-time optimizers of any kind can be utilized as processing program. Moreover, the processing program can also refer to a model predictive controller, where soft real-time requirements and high availability requirements with respect to a networking stack can be satisfied by the setup.

The deployment process can then be controlled from a cloud service, e.g. loT Hub and IoT Edge, using modern CI/CD and DevOps processes, e.g. the update of a processing program logic cloud-side can lead to the fully automatic deployment of this processing program on all relevant edge computing devices.

Generally, the invention as explained above has the advantage that processing programs are island-mode deployable, provide a flexible functionality for reading, processing and writing back process data from and to an interface server.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Procedures like the receiving of the plant process data, the providing of the container runtime environment, the running of the processing program, the processing of plant process data, etc., performed by one or several units or devices can be performed by any other number of units or devices. These procedures can be implemented as program code means of a computer program and/or as dedicated hardware.

A computer program product may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

The invention refers to an edge computing device for processing data acquired with respect to a production process of an industrial plant comprising a plant control system, wherein the control system comprises a server. The device comprises a first unit configured to be communicatively coupled to the server for receiving the data from the system. A second unit is configured to provide a container runtime environment configured to run a container on the second unit. A process container is configured to run on the environment, wherein the process container comprises a program configured to process data acquired with respect to a production process of the industrial plant when running inside the process container. The first unit is communicatively coupled to the second unit for providing the received data to the environment, wherein the program is configured to process the provided data.

## Claims

1. An edge computing device (120) for processing plant process data (112) acquired with respect to a production process of an industrial plant comprising a plant control system (110), wherein the plant control system (110) comprises an interface server (111), wherein the edge computing device (120) comprises:
- an interface computing unit (125) configured to be communicatively coupled to the interface server (111) for receiving the plant process data (112) from the plant control system (110), and
- a container computing unit (121) configured to provide a container runtime environment (122) configured to run a container on the container computing unit (121),
- a process container (123) configured to run on the container runtime environment (122), wherein the process container (123) comprises a processing program configured to process plant process data (112) acquired with respect to a production process of the industrial plant when running inside the process container (123), wherein the interface computing unit (125) is communicatively coupled to the container computing unit (121) for providing the received plant process data (112) to the container runtime environment (122), wherein the processing program is configured to process the provided plant process data (112),
wherein the interface computing unit (125) is communicatively coupled via a protocol converter (130) to the interface server (111), wherein the protocol converter (130) is configured to convert plant process data (112) provided in a legacy data format at the interface server (111) to a modern data format.

2. The edge computing device (120) according to any of the preceding claims, wherein the processing program is configured to provide plant control data for controlling or optimizing the industrial plant based on the processing of the plant process data (112), wherein the container computing unit (121) is communicatively coupled to the interface computing unit (125) for providing the plant control data to the interface computing unit (125), wherein the interface computing unit (125) is communicatively coupled with the interface server (111) for providing the plant control data (112) to the interface server (111) for implementation on the plant control system (110) of the industrial plant.

3. The edge computing device (120) according to claim 2, wherein the interface computing unit (125) is communicatively coupled via a protocol converter (130) to the interface server (111), wherein the protocol converter (130) is configured to isolate and tunnel the plant control data and to convert the plant control data from a data format utilized at the interface computing unit (125) to a data format utilized by the interface server (111).

4. The edge computing device (120) according to claim 3, wherein the protocol converter (130) is configured to convert the plant control data provided in a modern data format into a legacy data format to provide the plant control data to the plant control system (110).

5. The edge computing device (120) according to claim 4, wherein the protocol converter (130) comprises an OPC DA-to-UA converter, wherein the OPC DA-to-UA converter is configured to convert OPC UA formatted plant control data into an OPC DA format to provide the plant control data to the plant control system (110).

6. The edge computing device (120) according to any of the preceding claims, the edge computing device (120) comprises further an abstraction container (124) configured to run on the container runtime environment (122), wherein the abstraction container (124) comprises an abstraction program that is configured to pre-process the plant process data (112) before the plant process data (112) is provided to the process container (123).

7. The edge computing device (120) according to any of the preceding claims, wherein the interface computing unit (125) and/or the container computing unit (121) is configured to run a virtual Windows environment and/or a virtual Linux environment.

8. The edge computing device (120) according to any of the preceding claims, wherein the container runtime environment (122) is configured to allow a deployment of the processing program running within the process container (123) via a continuous integration and continuous delivery (CI/CD) workflow.

9. A computing framework (100) for processing plant process data (112) acquired with respect to a production process of an industrial plant comprising a plant control system (110), wherein the computing framework (100) comprises
- an edge computing device (120) according to any of the preceding claims, and
- an interface server (111) being part of the plant control system (110), wherein the interface server (111) is communicatively coupled to the interface computing unit (125) to provide plant process data (112) from the plant control system (110) to the interface computing unit (125) of the edge computing device (120) and vice versa.

10. A method (300) for processing plant process data (112) acquired with respect to a production process of an industrial plant comprising a plant control system (110), wherein the plant control system (110) comprises an interface server (111), wherein the method (300) comprises:
- receiving (310) plant process data (112) from the plant control system (110) via the interface server (111),
- providing (320) a container runtime environment (122) configured to run a container, wherein the container comprises a processing program configured to process the plant process data (112) of an industrial plant, when running inside the container, and
- providing (330) the received plant process data (112) to the container runtime environment (122), and processing the provided plant process data (112) by the processing program,
wherein the protocol converter (130) is configured to convert plant process data (112) provided in a legacy data format at the interface server (111) to a modern data format.

11. A computer program product for processing plant process data (112) acquired with respect to a production process of an industrial plant comprising a plant control system (110), wherein the computer program product comprises program code means causing an edge computing device (120) according to claims 1 to 8 to execute a method (300) according to claim 10.
